# EUROPÄISCHE PATENTSCHRIFT

(11) **EP 1 721 456 B1**
(45) Veröffentlichungstag und Bekanntmachung des Hinweises auf die Patenterteilung: **01.03.2017**
(21) Anmeldenummer: 05701587.7
(22) Anmeldetag: 21.01.2005
(51) Int. Cl.: H04N 5/74

(54) **VERFAHREN ZUM BETREIBEN EINER MOBILEN EINRICHTUNG ZUR PROJEKTION VON BILDDATEN SOWIE MOBILE PROJEKTOREINRICHTUNG**
METHOD FOR OPERATING A MOBILE DEVICE FOR PROJECTING IMAGE DATA, AND MOBILE PROJECTOR DEVICE
PROCEDE POUR FAIRE FONCTIONNER UN SYSTEME MOBILE CONCU POUR PROJETER DES DONNEES D'IMAGE ET SYSTEME DE PROJECTION MOBILE

(30) Priorität: 04.03.2004 DE 102004010710
(43) Veröffentlichungstag der Anmeldung: 15.11.2006
(73) Patentinhaber: QUALCOMM Incorporated, San Diego, CA 92121-1714 (US)
(72) Erfinder: HYING, Ralf, 81827 München (DE); WERNER, Marco, 81249 München (DE)
(74) Vertreter: Dunlop, Hugh Christopher
(86) Internationale Anmeldenummer: PCT/EP2005/050268
(87) Internationale Veröffentlichungsnummer: WO 2005/086494

(56) Entgegenhaltungen:
- EP-A- 1 100 277
- EP-A- 1 178 672
- DE-A1- 10 022 577
- US-A1- 2002 063 855
- US-A1- 2002 151 283
- US-A1- 2003 038 928

## Beschreibung

Die Erfindung betrifft ein Verfahren zum Betreiben einer mobilen Einrichtung zur Projektion von Bilddaten gemäß dem Oberbegriff des Anspruchs 1 sowie eine mobile Projektoreinrichtung gemäß dem Oberbegriff des Anspruchs 21.

Es ist bekannt, dass Geräte der Elektrotechnik einer ständigen Miniaturisierung unterliegen. Vor allem bei mobilen Geräten, wie beispielsweise Mobil- oder Schnurlostelefonen, ist man stets bemüht, die Dimension auf ein Mindestmaß zu reduzieren. Weiterhin ist bekannt, dass derartigen Geräten zunehmend Funktionen implementiert werden, die weit über die normale Telefonie hinausgehen. Beispiele für derartige Funktionen sind Radioempfang, Speichern und Abspielen von Audiodaten, Aufnahme von Bilddaten sowie Aufnahme von Videodaten. Aber nicht nur Geräte aus der mobilen Telefonie unterliegen dieser Entwicklung, sondern auch Geräte aus der Datenverarbeitung. Beispielsweise werden Projektoren, die auch als sogenannte Beamer bekannt sind, in immer kleineren Dimensionen auf den Markt gebracht. Es liegt daher nahe, diese Miniprojektoren in Zukunft auch in Verbindung mit Mobiltelefonen zu nutzen und beispielsweise im Mobiltelefon gespeicherte Bilddaten an jedem beliebigen Ort auf einer geeigneten Fläche zu projizieren.

Nachteilig hierbei ist es, dass im Gegensatz zur normalen Anwendung von Projektoren, die meist an einem eigens dafür vorbereiteten Ort positioniert und derart ausgerichtet werden, dass sie auf eine eigens hierfür vorgesehene Projektionsfläche gerichtet sind, sich die Parameter wie Position des Projektors sowie Projektionsfläche bei einem Miniprojektor der genannten Art ständig ändern.

Die US 2003/038928 A1 offenbart, beim Betrieb einer mobilen Einrichtung, die zur Projektion von Bilddaten eine Lichtquelle umfasst, während einer aktuellen Projektionsphase eine die Eigenschaft der aktuellen Projektionsumgebung wiedergebende Größe zu ermitteln und einen Parameter der aktuellen Projektionsphase auf Grundlage der ermittelten Größe anzupassen.

Die der Erfindung zugrundeliegende Aufgabe ist es, ein Verfahren sowie eine Einrichtung anzugeben, die eine mobile Projektion gewährleistet.

Diese Aufgabe wird durch das Verfahren zum Betreiben einer mobilen Einrichtung zur Projektion von Bilddaten gemäß dem Oberbegriff des Anspruchs 1 durch dessen kennzeichnende Merkmale sowie durch die mobile Projektoreinrichtung gemäß dem Oberbegriff des Anspruchs 21 durch dessen kennzeichnenden Merkmale gelöst.

Bei dem erfindungsgemäßen Verfahren zum Betreiben einer mobilen Einrichtung zur Projektion von Bilddaten mittels einer ersten Lichtquelle wird zumindest ein Mal während einer aktuellen Projektionsphase, zumindest eine die Eigenschaft der aktuellen Projektionsumgebung wiedergebende Größe ermittelt, wobei ein Anpassen mindestens eines Parameters der aktuellen Projektionsphase auf Grundlage der ermittelten Größe erfolgt.

Ein wesentlicher Vorteil des erfindungsgemäßen Verfahrens ist das Anpassen auf sich ändernde Eigenschaften der Projektionsumgebung, so dass zum einen ein mobiles Gerät unabhängig von dem aktuellen Ort in dem es eingesetzt wird, stets die bestmögliche Projektion gewährleistet. Selbst wenn die Einrichtungen am selben Ort betrieben werden, sich aber die Umgebungseigenschaften dennoch ändern, ist eine gleichbleibende Projektionsgüte erzielbar.

Genau eine Abstandsmessung durch eine Lichtemission wird in der Regel dann vorteilhaft eingesetzt werden, wenn beispielsweise die Projektoreinrichtung mit einer, insbesondere CCD, Kamera ausgestattet ist, die etwaige Verzerrungen einer durch die Lichtemission erzeugten Projektion erfassen kann, so dass aus der Verzerrung durch mathematische Methoden Rückschlüsse auf den Abstand geschlossen werden kann.

Des Weiteren können folgende Weiterbildungen alternativ bzw. ergänzend das Verfahren bereichern, in dem zumindest einmal während einer aktuellen Projektionsphase zumindest drei Abstandsmessungen durchgeführt werden, wobei die Messungen jeweils auf Grundlage eines emittierten ersten Signals erfolgt und wobei die ersten Signale mit unterschiedlichem Abstrahlwinkel emittiert werden und ein Emittieren mindestens eines zweiten Signals, anschließend ein Messen der Intensität von reflektierten Anteilen des zweiten Signals sowie Messen der Umgebungshelligkeit erfolgt. Schließlich erfolgt ein Anpassen mindestens eines Parameters der aktuellen Projektionsphase auf Grundlage zumindest eines der durch die vorgenannten Schritte ermittelten Ergebnisse.

Vorteil der beschriebenen Weiterbildungen ist die präzise Erfassung von die Projektionsqualität beeinflussender Projektionsbedingungen bzw. die Eigenschaften der Projektionsfläche, die sukzessive eine immer genauere Anpassung von Geräteeigenschaften auf die aktuellen Gegebenheiten ermöglicht, wobei sich dies dadurch ergibt, dass durch Messung von mindestens drei Abständen, bei denen der Abstrahlwinkel zu jeder Messung ein anderer ist, eine Ermittlung der sogenannten Normalen der Projektionsfläche, die aktuell gültig ist, ermöglicht wird und zudem in einem weiteren Schritt die Anpassung der Projektionsrichtung des projizierenden Gerätes derart durchgeführt werden kann, dass die Projektionsrichtung und die Normale der Projektionsfläche, die aktuell gültig ist, parallel zueinander verlaufen; d.h. der Winkel zwischen ihnen gleich null ist, so dass Bildverzerrungen, die sogenannte Trapezverzeichnung, ausgeschlossen werden. Möglich ist nach diesem erfindungsgemäßen Verfahren auch eine Art Zwischenauswertung dieser Messungen, die dann zu einer weiteren Durchführung von Abstandsmessungen führen, um eine präzisere Bestimmung der notwendigen Ausrichtung der Projektion zu erlauben. Des Weiteren wird durch Emittieren mindestens eines zweiten Signals sowie der Messung der Intensität von reflektierten Anteilen dieses Signals ein Rückschluss auf die Oberflächenbeschaffenheit bzw. die Reflektionsfähigkeit der gerade ausgewählten Projektionsfläche möglich. Auch dies kann in einem folgenden Schritt dann zu einer Anpassung des entsprechenden Parameters der Projektion resultieren bzw. bei totaler Unmöglichkeit der Nutzung der aktuellen Projektionsfläche beispielsweise zu einem entsprechenden Signal, welches an den Nutzer ausgegeben wird, führen. Das erfindungsgemäße Optimieren von Projektionsparametern wird schließlich auch noch durch Messen der Umgebungshelligkeit des aktuellen Standortes der Projektionseinrichtung dahingehend unterstützt, dass aus diesen ebenfalls Rückschlüsse für eine Anpassung gezogen werden können.

Vorzugsweise wird dabei das erste und/oder das zweite Signal durch Emittieren von Licht erzeugt. Dies hat den Vorteil, dass bereits im Projektor enthaltene Elemente, wie die erste Lichtquelle, genutzt und somit Kosten gespart werden können. Sehr gute Bildqualität erhält man dabei, wenn Laserlicht eingesetzt wird. Alternativ bzw. ergänzend ist es jedoch möglich, wenn man beispielsweise Kosten sparen will, auch die hierzu vergleichsweise günstigeren Leucht- bzw. Laserdioden einzusetzen.

Weiterhin ist es denkbar, dass die genannten Lichtquellen als zweite Quellen für die Umsetzung des Verfahrens vorgesehen und eingesetzt werden. So kann man beispielsweise Lichtquellen einsetzen, die keiner Vorwärmphase bedürfen, so dass eine Messung sehr schnell und während der Auswertung, beispielsweise die Aufwärmphase der ersten für die Projektion zuständigen Lichtquelle erfolgen kann. Zudem lassen sich als zweite Lichtquellen Quellen einsetzen, die besondere Eigenschaften, welche nützlich für das Verfahren sind, einbringen. Beispielsweise ist durch den Einsatz eines Lasers eine sehr präzise Abstandsmessung möglich.

Eine sehr kostengünstige Variante zur Detektion reflektierter Signalanteile ist die Nutzung einer Fotodiode, da Fotodioden in der Regel ein weit verbreitetes Massenprodukt und daher in der Anschaffung sehr günstiges Mittel sind. Alternativ ist es auch denkbar, hierfür ein Charge Coupled Device CCD einzusetzen, wodurch eine besonders genaue Erfassung reflektierter Signalanteile möglich wird.

Denkbar ist es auch, alternativ zu dem Vorgenannten, statt einer weiteren Lichtquelle die Abstandsmessung durch Emittieren von Schall, insbesondere mit Frequenzen im Ultraschallbereich, welche für den Nutzer nicht hörbar sind, erfolgt. Diese Vorgehensweise kann beispielsweise dann von Vorteil sein, wenn man die Projektoreinrichtung gemeinsam mit einem schallemittierenden Gerät, wie einem Mobilfunktelefon, verwendet, so dass Einrichtungen des Mobiltelefons für das Emittieren und Empfangen genutzt und somit Kosten reduziert werden können. Zudem ist durch die Tatsache, dass hierdurch keine weiteren Einrichtungen in den Projektor implementiert werden müssen, auch gewährleistet, dass die Abmessungen des Projektors klein gehalten werden können.

Unabhängig von der Art der Signalquelle lässt sich die Abstandsmessung durch Ermittlung der Zeit, die von dem Zeitpunkt der Emission bis zum Eintreffen der entsprechend reflektierten Signalanteile verstreicht, realisieren. Hierbei handelt es sich um eine sehr einfach zu implementierende Vorgehensweise.

Alternativ hierzu kann die Abstandsmessung auch durch Auswertung von sich durch reflektierende Signalanteile ergebender Interferenzen erfolgen, wobei dies zu genaueren Ergebnissen führt bzw. als Grundlage weiterer Auswertungen dienen kann.

Wird die Intensitätsmessung durch Nutzung von durch die Detektion reflektierter Signalanteile vorgesehener Einrichtungen unter Auslassung des zeitlich vorausgehenden Emittierens von Signalen durchgeführt, so hat dies den Vorteil, dass bereits vorhandene Elemente des Projektors zur Umsetzung des Verfahrens genutzt werden können, wobei ein weiterer Vorteil sich dadurch ergibt, dass wesentliche Elemente der für die Umsetzung der Abstandsmessung erforderlichen Routinen für die Intensitätsmessung genutzt werden können und nur geringfügige Ergänzungen bzw. Änderungen an diesen Routinen hierfür erforderlich sind, womit letztendlich ein für die Aufnahme eines das erfindungsgemäße Verfahren durchführenden Programms notwendiger Speicherplatzbedarf sehr gering gehalten werden kann.

Bei einer weiteren vorteilhaften Ausgestaltung der Erfindung wird im Falle, dass eine Wölbung der Projektionsfläche auf Grundlage einer Auswertung der in den mindestens drei Abstandsmessungen ermittelten Ergebnisse oder durch Nutzeingabe initiiert wird, zumindest eine weitere Abstandsmessung durchgeführt wird. Hierdurch wird eine sehr genaue sukzessive Anpassung an die Gegebenheiten der aktuell ausgewählten Projektionsfläche gewährleistet.

Werden die Schritte des erfindungsgemäßen Verfahrens während einer aktuellen Projektionsphase in diskreten Zeitabständen wiederholt, so lässt sich eine Anpassung an Änderungen der Umgebungsparameter in Echtzeit durchführen.

Wird im letzten Schritt des erfindungsgemäßen Verfahrens als ein erstes Ergebnis der Verlauf eines als Normale bezeichneten senkrecht zur Projektionsfläche stehenden Vektors ermittelt und die Projektionsachse derart ausgerichtet, dass sie parallel zu der Normalen verläuft, so werden Verzerrungen des Projektionsbildes, die auch als Trapezverzeichnung bekannt sind, vermieden.

Wird alternativ oder zusätzlich im letzten Schritt des erfindungsgemäßen Verfahrens als ein zweites Ergebnis der mittlere Abstand der Projekteinrichtung zur Projektionsfläche ermittelt und auf der Grundlage dieses Ergebnisses eine Fokussierungseinrichtung der Projektionseinrichtung derart manipuliert, dass eine optimale Fokussierung gewährleistet ist, so wird zudem auch noch eine optimale Schärfe des Bildes eingestellt.

Erfolgt eine Abschaltung der Projektionseinrichtung, wenn der Wert des mittleren Abstands einen als ersten Schwellwert eingestellten Maximalwert erreicht hat, einen als zweiten Schwellwert eingestellten Minimalwert erreicht hat und/oder der Winkel zwischen Projektionsachse und der Normalen einem als dritten Schwellwert eingestellten Maximalwert entspricht, so wird die Lebensdauer der Projektoren insbesondere der Leseprojektoren verlängert, da hierdurch eine Sicherheitsabschaltung erfolgt, wenn beispielsweise keine sinnvolle Projektionsfläche mehr detektiert wird. Dies wird in der Regel dann der Fall sein, wenn Abstand zu groß oder der Winkel zwischen Projektor und Projektionsfläche die genannten Schwellwerte überschreitet. Wird dies detektiert und erfolgt die Abschaltung, kann gewährleistet werden, dass der Laserstrahl nicht unbeabsichtigt andere Projektionen stört oder gar Menschen durch Einstrahlung des Laserlichts in deren Augen gefährdet. Zudem hat diese Weiterbildung den Vorteil, dass im Falle eines zu geringen Abstandes die hierdurch auftretende Intensität des zur Projektion aufgeweiteten Laserstrahls, die aufgrund des zu geringen Abstandes bei Einstrahlung ins Auge besonders gesundheitsgefährdend wirken würde, da sich hierdurch auch die Leistungsdichte erhöht, vermieden wird. Dies gilt ebenso für Projektionsgeräte mit konventioneller Beamertechnik. Dort tritt aber vor allem der positive Effekt des Energiesparens in den Vordergrund bzw. lediglich die Störung von anderen Personen, da bei konventioneller Beamertechnik eine Gesundheitsgefährdung eher auszuschließen ist.

Der Energiespareffekt kann zusätzlich noch gesteigert werden, wenn im letzten Schritt des erfindungsgemäßen Verfahrens auf Grundlage des zumindest einen Ergebnisses die Helligkeit auf einen Minimalwert geregelt wird. Hierdurch ist erreicht, dass stets nur das gerade notwendige Maß an Helligkeit und somit nur das gerade notwendige Maß an Intensität durch die Lichtquelle bereitgestellt wird, so dass Energieressourcen geschont werden, was bei mobilen Geräten in der Regel Batterien sein werden, deren Entladung man hierdurch verlangsamt.

Die erfindungsgemäße mobile Projektoreinrichtung weist Mittel zur Durchführung des Verfahrens in der vorgehend beschriebenen Art auf und stellt damit eine Möglichkeit zur Realisierung des Verfahrens dar.

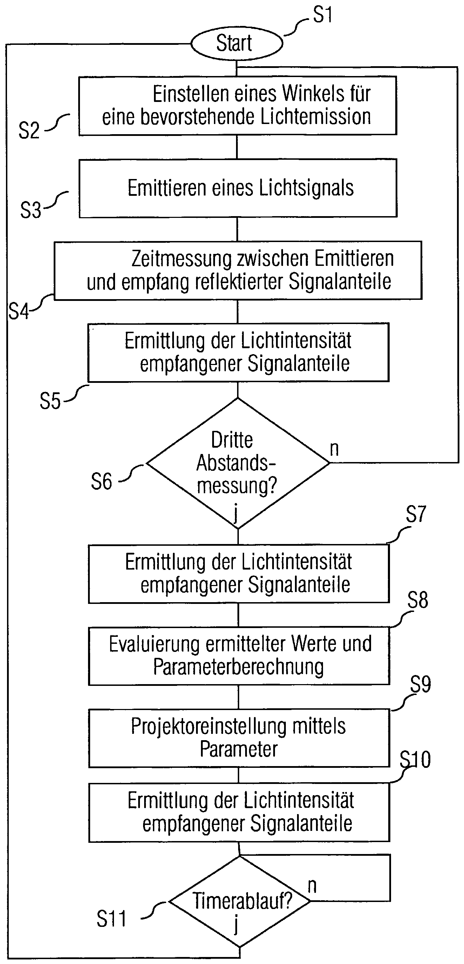

Weitere Einzelheiten sowie Vorteile des erfindungsgemäßen Gegenstandes werden anhand der einzigen Figur dargestellt. Dabei zeigt

Figur einen schematischen Ablauf des erfindungsgemäßen Verfahrens.

In der einzigen Figur ist ein Ablaufdiagramm eines Ausführungsbeispiels des erfindungsgemäßen Verfahrens dargestellt.

Zu erkennen ist, dass das Verfahren von einem Ausgangszustand in einem ersten Schritt S1 mit der Bezeichnung START ausgeht. Dieser Zustand kann beispielsweise einmal und zwar zu Beginn des Projektionsvorgangs also nach Einschalten der Projektoreinrichtung erfolgen oder aber auch nach Einschalten bzw. nach einer derartigen Initialeinstellung in regelmäßigen Abständen während der aktuellen Projektionsphase wiederholt werden, so dass auf sich während der Projektionsphase verändernde Umgebungsparameteränderung bzw. Positionswechsel oder andere sich auf die Projektionsparameter auswirkenden Änderungen nahezu in Echtzeit reagiert werden kann und somit für einen Betrachter trotz etwaiger Änderungen sich am projizierten Bild die Qualität der Darstellung nicht ändert.

Aus dem ersten Schritt S1 startend, beginnt das Verfahren in einem zweiten Schritt S2 mit einem Einstellen eines Winkels für eine bevorstehende Lichtemission.

Ausgehend von diesem zweiten Schritt S2 wird in einem dritten Schritt S3 ein Lichtsignal durch eine im Endgerät enthaltene Lichtquelle ausgesandt. In einem vierten Schritt S4 wird die Zeit zwischen Aussenden und Empfangen reflektierter Anteile dieses Signal gemessen. Zusätzlich wird in einem fünften Schritt S5 eine Lichtintensitätsermittlung anhand der empfangenen Signale durchgeführt.

Anschließend erfolgt eine Überprüfung, ob bereits eine dritte Abstandsmessung vorgenommen worden ist. Dies geschieht in einem sechsten Schritt S6. Sind noch keine drei Abstandsmessungen erreicht, springt das Verfahren wieder in den zweiten Schritt S2 zurück und wiederholt die vorangegangenen Schritte. Ist jedoch die dritte Abstandsmessung erfolgt, wird in einem siebten Schritt S7 eine Lichtintensitätsermittlung durchgeführt, wobei diesmal aufgrund dessen, dass kein Signal vorher emittiert worden ist, lediglich Lichtanteile der Umgebung, also somit die Helligkeit der Umgebung, erfasst werden.

Anschließend erfolgt in einem achten Schritt S8 eine Auswertung der ermittelten Werte sowie Berechnung der erforderlichen Parameter, die ein an die aktuellen Gegebenheiten angepasstes Projizieren mit optimalem Ergebnis ermöglichen.

Diese Parameter werden in einem neunten Schritt S9 eingestellt und in einem zehnten Schritt S10 wird ein Timer gestartet, nach dessen Zeitablauf, elfter Schritt S11, die verfahrensgemäßen Schritte beginnend mit dem ersten Schritt S1 wiederholt werden.

Durch das Emittieren von Lichtsignalen mit drei verschiedenen Schritten wird die Lage der Projektionsebene relativ zur Projektionsachse ermittelt. Zudem wird hiermit auch die Distanz zwischen Projektionsfläche und Projektor errechnet sowie die Reflektivität der Projektionsfläche bestimmt. Durch die weitere Lichtintensitätsdetektion wird auch als ein abschließender Parameter der aktuellen Gegebenheiten die Umgebungshelligkeit erfasst.

Durch das erfindungsgemäße Verfahren werden daher mit wenig Aufwand für die Projektion wesentliche Eigenschaften erfasst und eine Adaption auf diese dadurch beschriebenen Gegebenheiten erzielt.

Alternativ zur Abfrage in diskreten Zeitabständen kann auch eine Implementierung des Verfahrens derart vorgesehen und durchgeführt werden, dass die Messungen parallel zur laufenden Projektion in Echtzeit erfolgen. Dies wird insbesondere dann möglich sein, wenn das mobile Projektionsgerät eine zweite Signalquelle aufweist, die im nicht sichtbaren Bereich bzw. nicht hörbaren Bereich Signale emittiert und deren Reflektionen erfasst, so dass eine Anpassung in Echtzeit erfolgen kann, womit die im Folgenden aufgezählten Vorteile stets erzielt werden:
Eine Bildentzerrung, da Projektionsachse und Normale der Projektionsfläche stets auf Parallelität geprüft wird, des Weiteren ein optimaler Autofokus, da die Abstandsdaten ausgewertet werden können, um ein scharfes Projektionsbild zu erzeugen, was insbesondere bei konventionellen Beamern durch Einstellen der Optik erreicht wird.

Ein weiterer wichtiger Vorteil ist die Reduktion des Energieverbrauchs, da aus der Reflektivität der Projektionsfläche deren Entfernung vom Projektor und die Umgebungshelligkeit errechnet werden kann, welche Helligkeit erforderlich ist, um eine gut erkennbare Abbildung zu projizieren und die Steuerung derart eingestellt wird, dass genau dieses Mindestmaß an Helligkeit eingestellt wird und somit nicht mehr Energie verbraucht wird als notwendig. Ein weiterer energieschonender Vorteil ist durch eine Sicherheitsabschaltung gegeben, welche das beschriebene Beispiel ergänzen kann. Diese Sicherheitsabschaltung erfolgt, wenn beispielsweise über die Abstandsmessung ermittelt wird, dass zur Zeit keine sinnvoll nutzbare Projektionsfläche vorhanden ist, was in der Regel dann der Fall sein wird, wenn der Abstand zu groß oder der Winkel zwischen Projektor und Projektionsfläche Werte überschreitet. Sie kann aber auch erfolgen, wenn ein zu geringer Abstand gemessen wird. All diese genannten Aspekte, die zur Abschaltung führen, können über Schwellwertvergleiche initiiert werden, wobei bei Implementierung dieses Verfahrens in einem Projektor, der Laserlicht nutzt, zusätzlich zum Vorteil des Energiesparens auch den Vorteil des Schutzes von anwesenden Personen vor dem Einfallen des Laserstrahls in deren Augen bietet.

Die Erfindung zeichnet sich zudem auch dadurch aus, dass sie derart einfach ausgestaltet ist, dass sie in allen beliebigen Projektionsgeräten eingesetzt werden kann.

## Patentansprüche

1. Verfahren zum Betreiben einer mobilen Einrichtung zur Projektion von Bilddaten mittels einer ersten Lichtquelle, wobei,
a) zumindest ein Mal während einer aktuellen Projektionsphase (S1), zumindest eine die Eigenschaft der aktuellen Projektionsumgebung wiedergebende Größe ermittelt wird, wobei der mittlere Abstand der Projektionseinrichtung zur Projektionsfläche, und/oder der Verlauf eines als Normale bezeichneten senkrecht zur Projektionsfläche stehenden Vektors ermittelt wird,
b) ein Anpassen mindestens eines Parameters der aktuellen Projektionsphase auf Grundlage der ermittelten Größe erfolgt (S8.. S11), **dadurch gekennzeichnet, dass** eine Abschaltung der Projektionseinrichtung erfolgt, wenn der Wert des ermittelten mittleren Abstands einen als ersten Schwellwert eingestellten Maximalwert erreicht hat, einen als zweiten Schwellwert eingestellten Minimalwert erreicht hat und/oder der Winkel zwischen Projektionsachse und der ermittelten Normalen einem als dritten Schwellwert eingestellten Maximalwert entspricht.

2. Verfahren nach Anspruch 1, **dadurch gekennzeichnet, dass** eine Abstandsmessung auf Grundlage einer Lichtemission erfolgt.

3. Verfahren nach Anspruch 1, **dadurch gekennzeichnet, dass** zumindest drei Abstandsmessungen durchgeführt werden (S2.. S4, S6), wobei die Messung jeweils auf Grundlage eines emittierten ersten Signals (S3) erfolgt und wobei die ersten Signale mit unterschiedlichem Abstrahlwinkel (S2) emittiert werden.

4. Verfahren nach einem der vorhergehenden Ansprüche, **dadurch gekennzeichnet, dass**
a) mindestens ein zweites Signal (S2, S3) emittiert wird, b) Intensität von reflektierten Anteilen des zweiten Signals (S5) gemessen wird.

5. Verfahren nach einem der vorhergehenden Ansprüche, **dadurch gekennzeichnet, dass** die Umgebungshelligkeit (S7) gemessen wird.

6. Verfahren nach einem der Ansprüche 1 bis 5, **dadurch gekennzeichnet, dass** das erste Signal und/oder das zweite Signal durch Emittieren von Licht erzeugt wird (S3).

7. Verfahren nach Anspruch 6, **dadurch gekennzeichnet, dass** das Licht durch eine Einrichtung zur Erzeugung von Laserlicht emittiert wird.

8. Verfahren nach Anspruch 6, **dadurch gekennzeichnet, dass** das Licht durch zumindest eine Leuchtdiode emittiert wird.

9. Verfahren nach einem der vorhergehenden Ansprüche, **dadurch gekennzeichnet, dass** reflektierte Signalanteile des ersten Signals und/oder zweiten Signals durch eine Photodiode detektiert werden.

10. Verfahren nach einem der vorhergehenden Ansprüche, **dadurch gekennzeichnet, dass** reflektierte Signalanteile des ersten Signals und/oder zweiten Signals durch eine Charge Coupled Device "CCD-"Einrichtung detektiert werden.

11. Verfahren nach Anspruch 3 oder 4, **dadurch gekennzeichnet, dass** das erste Signal und/oder das zweite Signal durch Emittieren von Schall, insbesondere mit Frequenzen im Ultraschallbereich, erfolgt.

12. Verfahren nach einem der vorhergehenden Ansprüche, **dadurch gekennzeichnet, dass** die Abstandsmessung durch Ermittlung der Zeit von der Emission bis zum Eintreffen reflektierter Signalanteile erfolgt (S4).

13. Verfahren nach einem der Ansprühe 1 bis 11, **dadurch gekennzeichnet, dass** die Abstandsmessung durch Auswertung von sich durch reflektierten Signalanteile ergebender Interferenzen erfolgt.

14. Verfahren nach einem der vorhergehenden Ansprüche, **dadurch gekennzeichnet, dass** die Umgebungshelligkeitsmessung durch Nutzung von für die Detektion reflektierter Signalanteile vorgesehener Einrichtungen unter Auslassung des zeitlich vorausgehenden Emittierens von Signalen erfolgt (S7).

15. Verfahren nach einem der vorhergehenden Ansprüche, **dadurch gekennzeichnet, dass** im Falle, dass eine Wölbung der Projektionsfläche auf Grundlage des im Schritt a) ermittelten Ergebnisses erfolgende Auswertung oder durch Nutzereingabe indiziert ist, zumindest eine weitere Abstandsmessung durchgeführt wird.

16. Verfahren nach einem der vorhergehenden Ansprüche, **dadurch gekennzeichnet, dass** die Schritte des Verfahrens während einer aktuellen Projektionsphase in diskreten Zeitabständen wiederholt werden (S10, S11, S1).

17. Verfahren nach einem der vorhergehenden Ansprüche, **dadurch gekennzeichnet, dass** beim Anpassen des mindestens einen Parameters der aktuellen Projektionsphase als ein erstes Ergebnis der Verlauf eines als "Normale" bezeichneten senkrecht zur Projektionsfläche stehendem Vektors ermittelt und die Projektionsachse derart ausgerichtet wird, dass sie parallel zu der Normalen verläuft (S8, S9).

18. Verfahren nach einem der vorhergehenden Ansprüche, **dadurch gekennzeichnet, dass** beim Anpassen des mindestens einen Parameters der aktuellen Projektionsphase als ein zweites Ergebnis der mittlere Abstand der Projektoreinrichtung zur Projektionsfläche ermittelt und auf Grundlage des Ergebnisses eine Fokussierungseinrichtung der Projektionseinrichtung derart manipuliert wird, dass eine optimale Fokussierung gewährleistet ist (S8, S9).

19. Verfahren nach einem der vorhergehenden Ansprüche, **dadurch gekennzeichnet, dass** beim Anpassen des mindestens einen Parameters der aktuellen Projektionsphase auf Grundlage des zumindest einen Ergebnisses die Helligkeit auf einen Minimalwert geregelt wird.

20. Mobile Projektoreinrichtung, **gekennzeichnet durch** Mittel zur Durchführung des Verfahrens nach einem der vorhergehenden Ansprüche.

## Claims

1. A method of operating a mobile device for projecting image data using a first light source, wherein
a) at least one variable representing the characteristic of the current projection surroundings is ascertained at least once during a current projection phase (S1), wherein the mean distance from the projector device to the projection surface and/or the orientation of a vector, which is perpendicular to the projection surface and referred to as the "normal", is ascertained,
b) at least one parameter of the current projection phase on the basis of the ascertained variable (S8..S11) is adapted,
**characterized in that**
the projection device is switched off, if the value of the ascertained mean distance reaches a maximum value set as a first threshold value, reaches a minimum value set as a second threshold value and/or the angle between the projection axis and the ascertained normal corresponds to a maximum value set as a third threshold value.

2. The method according to claim 1, **characterized in that** the distance is measured on the basis of light emission.

3. The method according to claim 1, **characterized in that** at least three distance measurements are carried out (S2.. S4, S6), wherein in each case the measurement is based on a emitted first signal (S3) and wherein the first signals are emitted at different emission angles (S2).

4. The method according to one of the preceding claims, **characterized in that**
a) at least one second signal (S2, S3) is emitted,
b) the intensity of reflected portions of the second signal (S5) is measured.

5. The method according to one of the preceding claims, **characterized in that** the brightness of the surroundings (S7) is measured.

6. The method according to any of the claims 1 to 5, **characterized in that** the first signal and/or the second signal is/are generated by emission of light (S3).

7. The method according to claim 6, **characterized in that** the light is emitted by a device for generating laser light.

8. The method according to claim 6, **characterized in that** the light is emitted by at least one light-emitting diode.

9. The method according to one of the preceding claims, **characterized in that** reflected signal portions of the first signal and/or of the second signal are detected by a photodiode.

10. The method according to one of the preceding claims, **characterized in that** reflected signal portions of the first signal and/or of the second signal are detected by a Charge Coupled Device ("CCD-" device).

11. The method according to claim 3 or 4, **characterized in that** the first signal and/or the second signal are/is generated by emission of sound, in particular at frequencies in the ultrasound range.

12. The method according to one of the preceding claims, **characterized in that** the distance is measured by ascertaining the time from the emission to the arrival of reflected signal portions (S4).

13. The method according to claim 1 to 11, **characterized in that** the distance is measured by evaluating interference resulting from reflected signal portions.

14. The method according to one of the preceding claims, **characterized in that** the measurement of the brightness of the surroundings is carried out by using devices provided for detecting reflected signal portions with emission of signals having been emitted (S7) previously.

15. The method according to one of the preceding claims, **characterized in that**, at least one further distance measurement is carried out, if a curvature of the projection surface is indicated on the basis of an evaluation of the result ascertained in step a) or by user input.

16. The method according to one of the preceding claims, **characterized in that** the steps of the method are repeated at discrete time intervals during a current projection phase (S10,S11,S1).

17. The method according to one of the preceding claims, **characterized in that**, in adapting the at least one parameter of the projection phase, the orientation of a vector, which is perpendicular to the projection surface and referred to as the "normal", is ascertained, as a first result, and the projection axis is oriented such that it runs parallel to the normal (S8, S9).

18. The method according to one of the preceding claims, **characterized in that**, in adapting the at least one parameter of the projection phase, the mean distance from the projector device to the projection surface is ascertained, as a second result, and a focusing device of the projection device is manipulated based on the result such that optimum focusing is ensured (S8, S9).

19. The method according to one of the preceding claims, **characterized in that**, in adapting the at least one parameter of the projection phase based on the at least one result, the brightness is adjusted to a minimum value.

20. A mobile projector device, **characterized by** means for carrying out the method according to one of the preceding claims.

## Revendications

1. Procédé de fonctionnement d'un dispositif mobile pour la projection de données d'image au moyen d'une première source lumineuse, dans lequel
a) au moins une grandeur descriptive de la propriété de l'environnement de projection actuel est déterminée au moins une fois pendant une phase de projection actuelle (S1),
dans laquelle l'espacement moyen entre le dispositif de projection et la surface de projection, et/ou le tracé d'un vecteur qualifié de normale perpendiculairement à la surface de projection sont déterminés,
b) un ajustement d'au moins un paramètre de la phase de projection actuelle est effectué sur la base de la grandeur déterminée (S8.. S11),
**caractérisé en ce que**
le dispositif de projection est déconnecté si la valeur de l'espacement moyen déterminé atteint une valeur maximale réglée comme première valeur seuil, une valeur minimale réglée comme deuxième valeur seuil et/ou si l'angle entre l'axe de projection et la normale déterminée correspond à une valeur maximale réglée comme troisième valeur seuil.

2. Procédé selon la revendication 1, **caractérisé en ce qu'**une mesure d'espacement est exécutée sur la base d'une émission lumineuse.

3. Procédé selon la revendication 1, **caractérisé en ce qu'**au moins trois mesures d'espacement (S2 .. S4, S6) sont exécutées, dans lequel chaque mesure est exécutée sur la base d'un premier signal (S3) émis, et dans lequel les premiers signaux sont émis avec des angles de rayonnement (S2) différents.

4. Procédé selon l'une des revendications précédentes, **caractérisé en ce que**
a) au moins un deuxième signal (S2, S3) est émis, b) l'intensité de parts réfléchies du deuxième signal (S5) est mesurée.

5. Procédé selon l'une des revendications précédentes, **caractérisé en ce que** la luminosité ambiante (S7) est mesurée.

6. Procédé selon l'une des revendications 1 à 5, **caractérisé en ce que** le premier signal et/ou le deuxième signal est généré par émission de lumière (S3).

7. Procédé selon la revendication 6, **caractérisé en ce que** la lumière est émise par un dispositif de génération de lumière laser.

8. Procédé selon la revendication 6, **caractérisé en ce que** la lumière est émise par au moins une diode électroluminescente.

9. Procédé selon l'une des revendications précédentes, **caractérisé en ce que** les parts de signal réfléchies du premier signal et/ou du deuxième signal sont détectées par une photodiode.

10. Procédé selon l'une des revendications précédentes, **caractérisé en ce que** les parts de signal réfléchies du premier signal et/ou du deuxième signal sont détectées par un dispositif à couplage de charge « CCD ».

11. Procédé selon la revendication 3 ou 4, **caractérisé en ce que** le premier signal et/ou le deuxième signal sont obtenus par émission de son, en particulier avec des fréquences dans la plage ultrasonique.

12. Procédé selon l'une des revendications précédentes, **caractérisé en ce que** la mesure d'espacement est exécutée par détermination du temps écoulé entre l'émission et la réception des parts de signal réfléchies (S4).

13. Procédé selon l'une des revendications 1 à 11, **caractérisé en ce que** la mesure d'espacement est exécutée par analyse des interférences résultant des parts de signal réfléchies.

14. Procédé selon l'une des revendications précédentes, **caractérisé en ce que** la mesure de luminosité ambiante est exécutée en utilisant des dispositifs prévus pour la détection de parts de signal réfléchies, en excluant l'émission préalable temporairement de signaux (S7).

15. Procédé selon l'une des revendications précédentes, **caractérisé en ce qu'**au moins une autre mesure d'espacement est exécutée dans le cas où une courbure de la surface de projection est déclenchée sur la base d'une analyse du résultat déterminé en étape a) ou par entrée d'utilisateur.

16. Procédé selon l'une des revendications précédentes, **caractérisé en ce que** les étapes du procédé sont répétées à intervalles temporels discrets pendant une phase de projection actuelle (S10, S11, S1).

17. Procédé selon l'une des revendications précédentes, **caractérisé en ce que** lors de l'ajustement dudit au moins un paramètre de la phase de projection actuelle en tant que premier résultat, le tracé d'un vecteur qualifié de "normale" perpendiculairement à la surface de projection est déterminé, et l'axe de projection est orienté de manière à s'étendre parallèlement à la normale (S8, S9).

18. Procédé selon l'une des revendications précédentes, **caractérisé en ce que** lors de l'ajustement dudit au moins un paramètre de la phase de projection actuelle en tant que deuxième résultat, l'espacement moyen entre le dispositif de projection et la surface de projection est déterminé, et un dispositif de focalisation du dispositif de projection est manipulé sur la base du résultat de manière à assurer une focalisation optimale (S8, S9).

19. Procédé selon l'une des revendications précédentes, **caractérisé en ce que** lors de l'ajustement dudit au moins un paramètre de la phase de projection actuelle, la luminosité est réglée à une valeur minimale sur la base dudit au moins un résultat.

20. Dispositif de projection mobile, **caractérisé par** des moyens d'exécution du procédé selon l'une des revendications précédentes.
